# EUROPEAN PATENT SPECIFICATION

(11) **EP 4 104 191 B1**
(45) Date of publication and mention of the grant of the patent: **21.01.2026**
(21) Application number: 21711078.2
(22) Date of filing: 10.02.2021
(51) Int. Cl.: G21C 11/08

(54) **METHOD OF REPLACING A FUNCTIONALITY OF A THERMAL SHIELD FLEXURE, A THERMAL SHIELD FLEXURE MEMBER, AND A SYSTEM INCLUDING THE SAME**
VERFAHREN ZUM ERSETZEN EINER FUNKTIONALITÄT EINER BIEGUNG EINER THERMISCHEN ABSCHIRMUNG, BIEGUNGSELEMENT EINER THERMISCHEN ABSCHIRMUNG UND SYSTEM DAMIT
PROCÉDÉ DE REMPLACEMENT D'UNE FONCTIONNALITÉ D'UNE FLEXION DE BOUCLIER THERMIQUE, ÉLÉMENT DE FLEXION DE BOUCLIER THERMIQUE ET SYSTÈME LE COMPRENANT

(30) Priority: 13.02.2020 US 202062975957 P
(43) Date of publication of application: 21.12.2022
(73) Proprietor: Westinghouse Electric Company LLC, Cranberry Township, PA 16066 (US)
(72) Inventor: PILLARD, Mark Michael, Gurnee, Illinois 60031 (US); PALAMARA, Matthew James, Butler, Pennsylvania 16002 (US); SMITH, Stephen Daniel, Cranberry Township, Pennsylvania 16066 (US)
(74) Representative: Novagraaf Group
(86) International application number: PCT/US2021/017483
(87) International publication number: WO 2021/163211

(56) References cited:
- EP-A2- 0 327 056
- US-A- 4 652 418
- US-B2- 8 615 065
- LUBIN B T ET AL: "Analysis of internals vibration monitoring and loose part monitoring systems data related to the St. Lucie 1 thermal shield failure", PROGRESS IN NUCLEAR ENERGY, PERGAMON PRESS, OXFORD, GB, vol. 21, 1 January 1988 (1988-01-01), pages 117 - 126, XP025414350, ISSN: 0149-1970, [retrieved on 19880101], DOI: 10.1016/0149-1970(88)90026-1

## Description

### CROSS-REFERENCE TO RELATED APPLICATIONS

This application claims the benefit of the filing date of United States Provisional Patent Application No. 62/975,957 filed on February 13, 2020, titled METHOD OF REPLACING A FUNCTIONALITY OF A THERMAL SHIELD FLEXURE, A THERMAL SHIELD FLEXURE MEMBER, AND A SYSTEM INCLUDING THE SAME.

### BACKGROUND

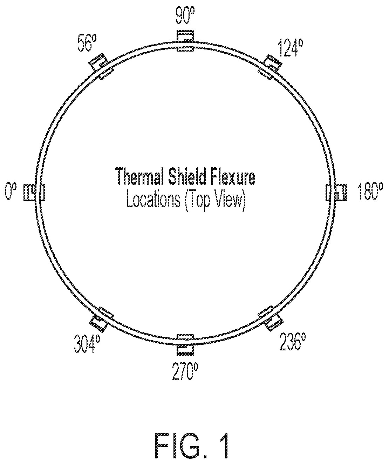

In certain pressurized water reactors, a plurality of thermal shield flexures are utilized to connect a core barrel to a thermal shield at multiple positions around a circumference of a reactor vessel. A top view of exemplary thermal shield flexure locations around a circumference of a reactor vessel is shown in FIG. 1. As the core barrel and the thermal shield are geometrically different and vary in proximity to the fuel, the core barrel and the thermal shield can expand axially and radially at different rates. One function of the thermal shield flexures is to provide flexibility in the axial direction to accommodate the differential axial expansion of the core barrel and the thermal shield. Another function of the thermal shield flexures is to provide rigidity in the radial direction to inhibit undesirable shell mode vibrations of the core barrel and the thermal shield.

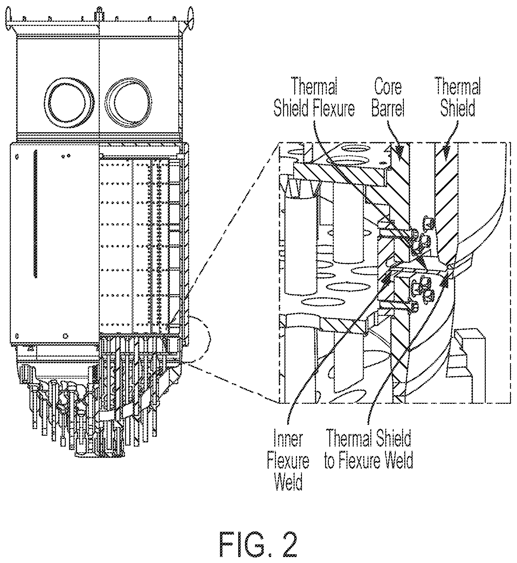

For such pressurized water reactors, the thermal shield flexures are generally T-shaped members having an arm portion (the top portion of the T-shape) and a stem portion (the vertical portion of the T-shape). For each thermal shield flexure, the arm portion of the thermal shield flexure is positioned against an interior surface of the core barrel and the stem portion of the thermal shield flexure extends radially outward from the arm portion, through the core barrel and to the thermal shield. The arm portion is secured to the core barrel by a plurality of bolts which pass from an exterior surface of the core barrel, through corresponding openings of the core barrel, and into corresponding receptacles defined by the arm portion of the thermal shield flexure. For the exemplary thermal shield flexure shown in FIG. 2, there are eight bolts which collectively secure the arm portion of the thermal shield flexure to the core barrel - four of the eight bolts are positioned "above" the stem portion of thermal shield flexure and the other four of the eight bolts are positioned "below" the stem portion of thermal shield flexure. The stem portion of the thermal shield flexure is secured to the thermal shield by a welded joint and can also be welded to the arm portion of the thermal shield flexure by a welded joint (See FIG. 2).

U.S. Patent No. 4,652,418 discloses a tool insertable in the narrow annular access space between the cylindrical core barrel and the thermal shield of a nuclear reactor for testing and removing a plug from a flow hole in the core barrel. The tool includes two hydraulically driven jaws with gripping flanges receivable in and for gripping a peripheral groove in the plug head. The jaws are thin plate-like members, each carrying two short pistons having a length less than the thickness of the jaws and hydraulically extendable into engagement with the core barrel for exerting on the jaws and the gripped plug a predetermined force in a plugremoving direction.

The thermal shield flexures are installed during the construction of the pressurized water reactor, before the pressurized water reactor becomes operational. Over time, due to thermal expansion of the core barrel and the thermal shield, as well as vibration of the core barrel, it may be possible for one or more of the welded joints to degrade or even fail, thereby potentially impacting the desired functionality of the thermal shield flexures. Given that the respective arm portions of the thermal shield flexures are positioned interior to the core barrel, replacement of any one of the thermal shield flexures with the same type of thermal shield flexure can require a significant field effort (schedule and cost). What is needed is a different thermal shield flexure which can be utilized to replace the functionality of any one of the above-described thermal shield flexures, and can be installed without welding and from the outside of the core barrel.

### BRIEF DESCRIPTION OF THE DRAWINGS

The novel features of the aspects described herein are set forth with particularity in the appended claims. The aspects, however, both as to organization and methods of operation may be better understood by reference to the following description, taken in conjunction with the accompanying drawings.
FIG 1 illustrates a top view of exemplary thermal shield flexure locations around a circumference of a reactor vessel;
FIG. 2 illustrates an exemplary thermal shield flexure secured to a core barrel and a thermal shield of a reactor vessel;
FIG. 3 illustrates a front view of another exemplary thermal shield flexure member;
FIG. 4 illustrates a rear view of the exemplary thermal shield flexure member of FIG. 3;
FIG. 5 illustrates a thermal shield flexure member, in accordance with at least one other aspect of the present disclosure;
FIG. 6 illustrates a system which includes the thermal shield flexure member of FIG. 3;
FIG. 7 illustrates a bolt of the system of FIG. 6;
FIG. 8 illustrates a recess defined by an opening of the thermal shield flexure member of FIG. 3;
FIG. 9 illustrates a cross section of the system of FIG. 6;
FIG. 10 illustrates a method of replacing a functionality of a thermal shield flexure, in accordance with at least one aspect of the present disclosure; and
FIG. 11 illustrates exterior surfaces of a thermal shield and a core barrel of the system of FIG. 6 at a step of the method of FIG. 10.

### DETAILED DESCRIPTION

It is to be understood that at least some of the figures and descriptions of the invention have been simplified to illustrate elements that are relevant for a clear understanding of the invention, while eliminating, for purposes of clarity, other elements that those of ordinary skill in the art will appreciate may also comprise a portion of the invention. However, because such elements are well known in the art, and because they do not facilitate a better understanding of the invention, a description of such elements is not provided herein.

In the following detailed description, reference is made to the accompanying drawings, which form a part hereof. In the drawings, similar symbols and reference characters typically identify similar components throughout several views, unless context dictates otherwise. The illustrative aspects described in the detailed description, drawings and claims are not meant to be limiting. Other aspects may be utilized, and other changes may be made, without departing from the scope of the technology described herein.

The following description of certain examples of the technology should not be used to limit its scope. Other examples, features, aspects, embodiments and advantages of the technology will become apparent to those skilled in the art from the following description, which is by way of illustration, one of the best modes contemplated for carrying out the technology. As will be realized, the technology described herein is capable of other different and obvious aspects, all without departing from the technology. Accordingly, the drawings and descriptions should be regarded as illustrative in nature and not restrictive.

The following described teachings, expressions, aspects, embodiments, examples, etc. should therefore not be viewed in isolation relative to each other. Various suitable ways in which the teachings herein may be combined will be readily apparent to those of ordinary skill in the art in view of the teachings herein. Such modifications and variations are intended to be included within the scope of the claims.

Before explaining the various aspects of the thermal shield flexure member in detail, it should be noted that the various aspects disclosed herein are not limited in their application or use to the details of construction and arrangement of parts illustrated in the accompanying drawings and description. Rather, the disclosed aspects may be positioned or incorporated in other aspects, embodiments, variations and modifications thereof, and may be practiced or carried out in various ways. Accordingly, aspects of the thermal shield flexure member disclosed herein are illustrative in nature and are not meant to limit the scope or application thereof. Furthermore, unless otherwise indicated, the terms and expressions employed herein have been chosen for the purpose of describing the aspects for the convenience of the reader and are not meant to limit the scope thereof. In addition, it should be understood that any one or more of the disclosed aspects, expressions of aspects, and/or examples thereof, can be combined with any one or more of the other disclosed aspects, expressions of aspects, and/or examples thereof, without limitation.

Also, in the following description, it is to be understood that terms such as inward, outward, upward, downward, above, top, below, floor, left, right, side, interior, exterior and the like are words of convenience and are not to be construed as limiting terms. Terminology used herein is not meant to be limiting insofar as devices described herein, or portions thereof, may be attached or utilized in other orientations. The various aspects will be described in more detail with reference to the drawings.

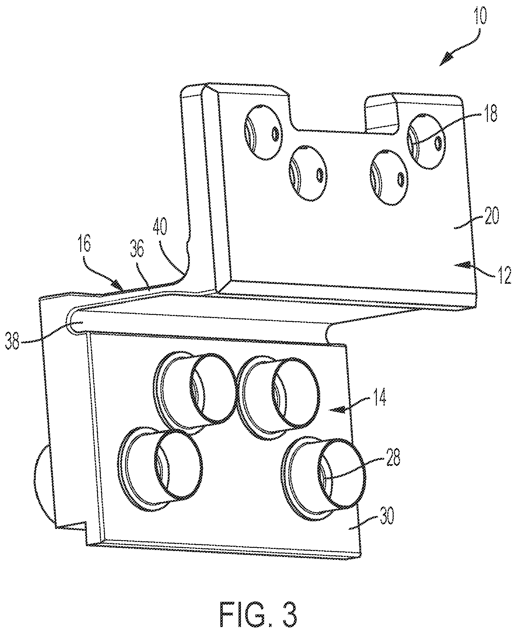

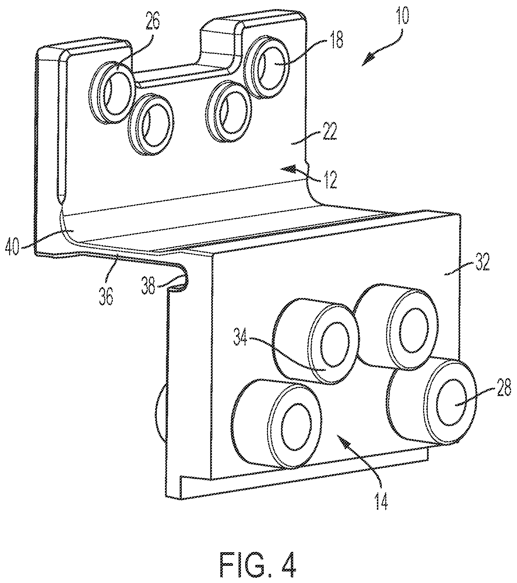

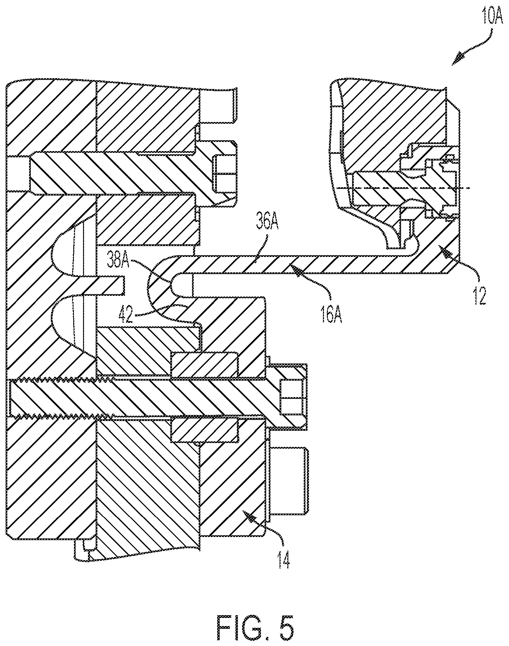

FIG. 3 illustrates a front view of a thermal shield flexure member 10, and FIG. 4 illustrates a rear view of the thermal shield flexure member 10. The thermal shield flexure member 10 can be utilized as a "replacement" for one of the thermal shield flexures described above. The thermal shield flexure member 10 includes a first face portion 12, a second face portion 14, and a third portion 16 connected to the first and second face portions 12, 14. For the exemplary aspects shown in FIGS. 3, and 5, the third portion 16 generally exhibits thickness changes and radii near the transitions into the first face portion 12 and the second face portion 14. According to various aspects, the third portion 16 is formed integral with the first and second face portions 12, 14.

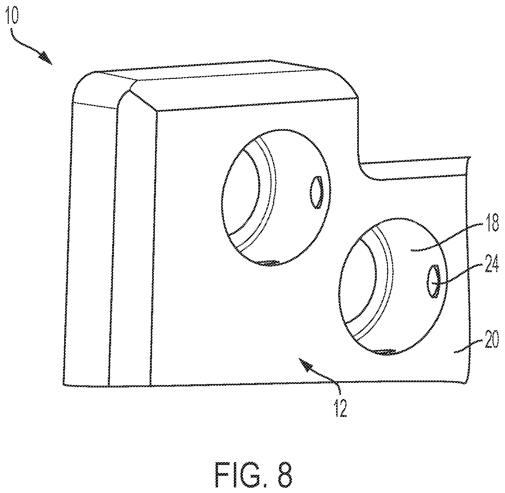

The first face portion 12 defines a plurality of openings 18 which pass through the first face portion 12, from a first side 20 of the first face portion 12 to a second side 22 (See FIG. 4) of the first face portion 12. Although four of the openings 18 are shown in FIG. 3, according to other aspects, the number of openings 18 can be less than or greater than four. Each of the openings 18 are countersunk on the first side 20. According to various aspects, each of the openings 18 include recesses 24 (See FIG. 8) machined into the sidewall of the opening 18. The second side 22 defines four bosses 26 (See FIG. 4) or protrusions which surround the openings 18. As explained in more detail hereinbelow, when the thermal shield flexure member 10 is used to replace the functionality of one of the thermal shield flexures described above, the first face portion 12 is bolted to the thermal shield by bolts which pass through the respective openings 18 and into corresponding receptacles defined by the thermal shield. The bosses 26 assist with the alignment of the openings 18 with the receptacles defined by the thermal shield during installation of the thermal shield flexure member 10, and also operate to carry shear loads to reduce the stress on the bolts which secure the thermal shield flexure member 10 to the thermal shield.

The second face portion 14 defines a plurality of openings 28 which pass through the second face portion 14, from a first side 30 of the second face portion 14 to a second side 32 (See FIG. 4) of the second face portion 14. Although four of the openings 28 are shown in FIG. 4, according to other aspects, the number of openings 28 can be less than or greater than four. Each of the four openings 28 are countersunk on the first side 30, but the countersinking of the openings 28 may not be as deep as the countersinking of the openings 18. According to various aspects, each of the openings 28 define a recess machined into the sidewall of the opening 28, where the recess is similar or identical to the recess 24 shown in FIG. 8. On the second side 32, each of the openings 28 are configured to receive press-fit bushings 34 (See FIG. 4) which, when installed, are positioned against the second side 32 and surround the openings 28 on the second side 32. According to various aspects, the thermal shield flexure member 10 includes the installed bushings 34.

As explained in more detail hereinbelow, when the thermal shield flexure member 10 is used to replace the functionality of one of the thermal shield flexures described above, the second face portion 14 is bolted to the core barrel by bolts which pass through the respective openings 28 and the corresponding bushings 34, through corresponding openings defined by the core barrel, and into corresponding receptacles defined by the arm portion of the thermal shield flexure. The bushings 34 assist with the alignment of the openings 28 with the openings defined by the core barrel during installation of the thermal shield flexure member 10, and also operate to carry shear loads to reduce the stress on the bolts which secure the thermal shield flexure member 10 to the core barrel (by securing the thermal shield flexure member 10 to the arm portion of the "replaced" thermal shield flexure). The bushings 34 can be machined to custom lengths to better enable the installation of the thermal shield flexure member 10. According to various aspects, the bushings 34 can have a length which allows them to protrude the same distance from second face portion 14 that the bosses 26 protrude from the first face portion 12. According to other aspects, the bushings 34 can have a length which allows them to protrude a greater distance from the second face portion 14 than the bosses 26 protrude from the first face portion 12 (See FIG. 5).

The third portion 16 includes a first radiused portion 40 connected to the first face portion 12, and a second radiused portion 38 connected to the second face portion 14. The third portion 16 also includes a leg portion 36 connected to the first and second radiused portions 38, 40, and operates to absorb axial deflection of the core barrel and/or the thermal shield.

The first and second face portions 12, 14 may be of any suitable size and shape. The third portion 16 may be of any suitable length, thickness and shape. In general, the less material utilized for the third portion 16, the greater the capacity for absorbing the axial deflection. Similarly, the longer the leg portion 36 of the third portion 16, the more the axial flexibility of the thermal shield flexure member 10.

FIG. 5 illustrates a thermal shield flexure member 10A, in accordance with at least one other aspect of the present disclosure. The thermal shield flexure member 10A is similar to the thermal shield flexure member 10, but is different. The thermal shield flexure member 10A includes the first and second face portions 12, 14 as described above (including the bushings 34) and a third portion 16A connected to the first and second face portions 12, 14. However, according to the invention, the third portion 16A is different from the third portion 16 described above. According to the invention, the third portion 16A includes a first leg portion 36A which is similar or identical to the leg portion 36, a radiused portion 38A which is similar to the radiused portion 38 described above, and a second leg portion 42 which is connected to the radiused portion 38A and to the second face portion 14. Of course, thermal shield flexure members having sizes and shapes different from the exemplary ones shown in FIGS. 3-5 can be utilized as long as they provide functionality similar to the functionality provided the exemplary ones shown in FIGS. 3-5. For purposes of simplicity, the thermal shield flexure member will be described in the context of the thermal shield flexure member 10, although the thermal shield flexure member 10A and other aspects of the thermal shield flexure member are equally applicable.

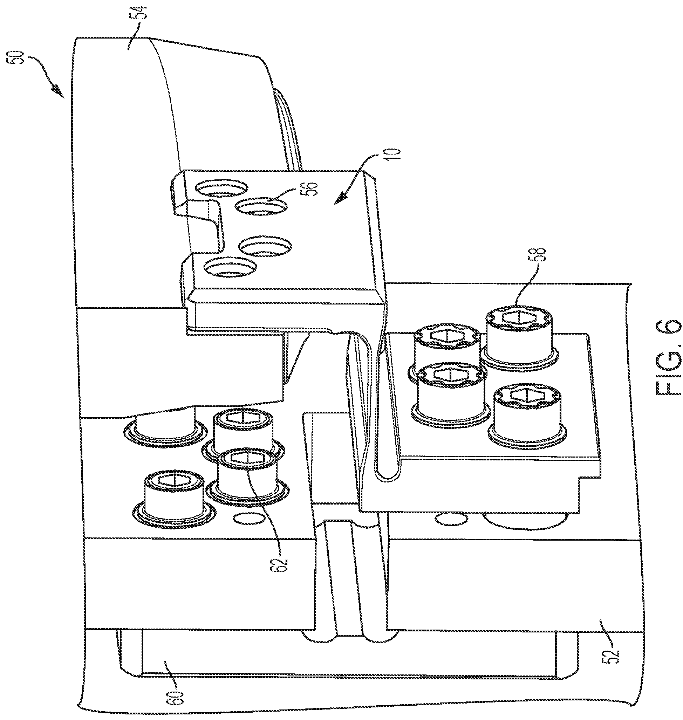

FIG. 6 illustrates a system 50. Once the thermal shield flexure member 10 is connected to the thermal shield and the core barrel as described above, the thermal shield flexure member 10 may be considered as part of the system 50. The system 50 includes the thermal shield flexure member 10, the core barrel 52, the thermal shield 54, the bolts 56 which connect the thermal shield flexure member 10 to the thermal shield 54, and the bolts 58 which connect the thermal shield flexure member 10 to the core barrel 52 (by securing the thermal shield flexure member 10 to the arm portion of the "replaced" thermal shield flexure). According to various aspects, the system 50 also includes the arm portion 60 of the "replaced" thermal shield flexure and the bolts 62 which connect the arm portion 60 of the "replaced" thermal shield flexure to the core barrel 52.

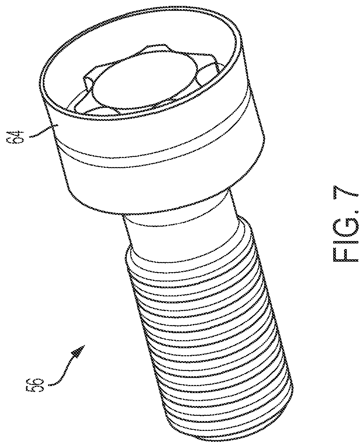

FIG. 7 illustrates a bolt 56 of the system of FIG. 6. According to various aspects, the bolts 56 may include an integral locking member 64 which assists in keeping the bolts 56 secured to the thermal shield flexure member 10. According to various aspects, the bolts 56 are similar or identical to those described in U.S. Patent No. 6,164,886. According to various aspects, the bolts 58 and/or the bolts 62 may also include an integral locking member similar or identical to the integral locking member 64.

FIG. 8 illustrates recesses 24 defined by the openings 18 of the thermal shield flexure member 10, in accordance with at least one aspect of the present disclosure. Each recess 24 is configured to receive the integral locking member 64 of a corresponding one of the bolts 56, and cooperates with the integral locking member 64 to assist in keeping the bolt 56 secured to the thermal shield flexure member 10. Although not shown for purposes of duplicity, according to various aspects, the openings 28 may also define recesses similar or identical to the recesses 24, where each recess is configured to receive the integral locking member 64 of a corresponding one of the bolts 58 to assist in keeping the bolt 58 secured to the thermal shield flexure member 10.

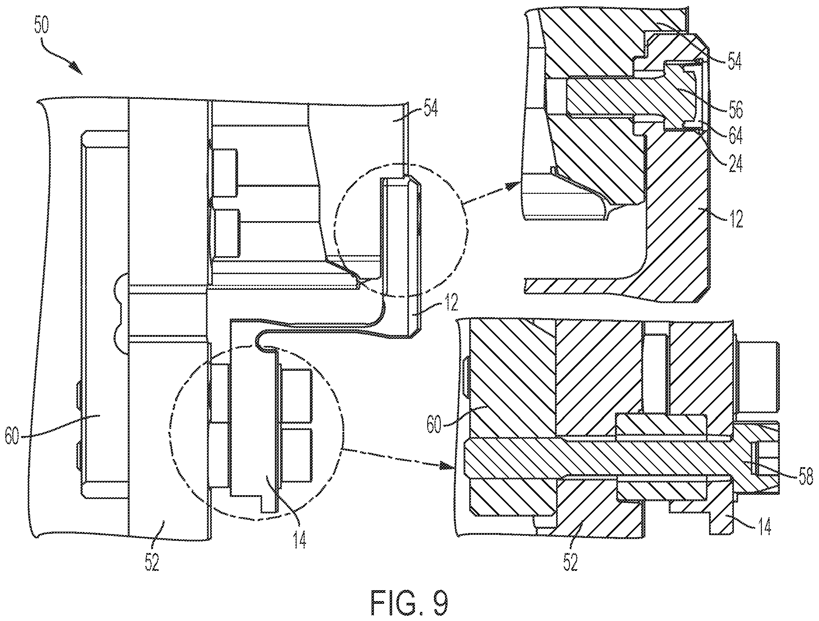

FIG. 9 illustrates a cross section of the system 50, in accordance with at least one aspect of the present disclosure. The cross-section of the system 50 also shows a cross-section of the thermal shield flexure member 10, where the first face portion 12 of the thermal shield flexure member 10 is shown as being bolted to the thermal shield 54 and the second face portion 14 of the thermal shield flexure member 10 is shown as being bolted to the arm portion 60 of the "replaced" thermal shield flexure. As shown in the exploded cross-section of the connection of the first face portion 12 to the thermal shield 54, the opening 18 includes the recess 24 and the bolt 56 includes the integral locking member 64. As shown in the exploded cross-section of the connection of the second face portion 14 to the arm portion 60 of the "replaced" thermal shield flexure, the bushing 34 at the rear of the second face portion 14 is received by a countersunk opening in the core barrel 52, the bolt 58 is seated in a countersunk opening 28 of the second face portion 14, the bolt 58 extends through the core barrel 52 and is threadedly connected to the arm portion 60 of the "replaced" thermal shield flexure.

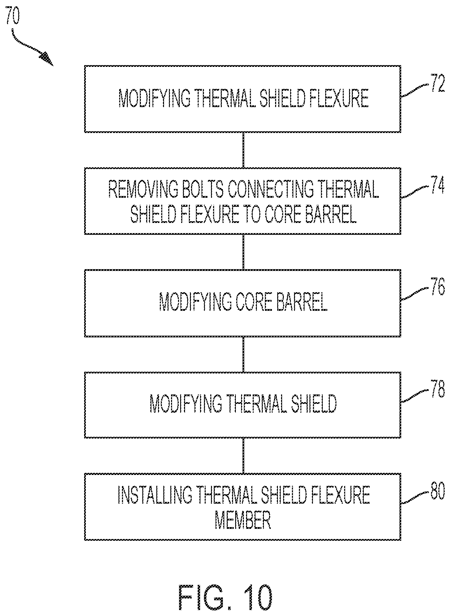

FIG. 10 illustrates a method 70 of replacing a functionality of a thermal shield flexure, in accordance with at least one aspect of the present disclosure. Prior to the installation of the thermal shield flexure member 10 which replaces the functionality of the "replaced" thermal shield flexure, the thermal shield fixture is modified 70 by removing the stem portion (See FIG. 2) of the thermal shield fixture. The removal of the stem portion can be realized in any suitable manner. For example, according to various aspects, the welded joints connecting the stem portion to the arm portion 60 and/or the thermal shield 54 can be removed by mechanical reversal (e.g., using a grinder or a milling tool) or by thermal reversal such as, for example, electrical discharge milling (EDM). Once the welded joints are removed, the stem portion of the thermal shield flexure can then be removed. Once the stem portion has been removed, the bolts connecting the bottom portion of the arm portion 60 of the modified thermal shield flexure to the core barrel 52 are removed 74. The bolts connecting the top portion of the arm portion 60 of the modified thermal shield flexure to the core barrel 52 remain in place.

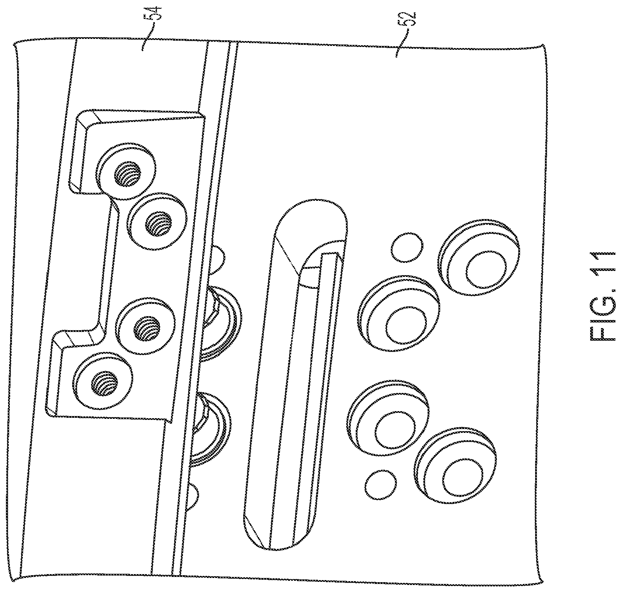

After the bolts connecting the bottom portion of the arm portion 60 of the modified thermal shield flexure to the core barrel 52 have been removed, the core barrel 52 is modified 76 to accept the thermal shield flexure member 10. Either before, after or concurrently with the modifications to the core barrel 52, the thermal shield 54 is also modified 78 to accept the thermal shield flexure member 50. The modifications may be realized in any suitable manner. For example, according to various aspects, conventional machining (a tapping tool) may be utilized to create new threaded receptacles in the thermal shield 54 to receive the threads of the bolts 56. Conventional machining using milling cutters or EDM may be utilized to countersink the threaded receptacles in the thermal shield 54 (See FIG. 11) to receive the bosses 26 of the first face portion 12, and to create the recesses 24 which receive the integral locking members 64 of the bolts 56. Conventional milling or EDM may also be utilized to countersink the openings in the core barrel 52 (See FIG. 11) to receive the bushings 34 of the second face portion 14. The relative surfaces of the bosses 26 and the bushings 34 of the thermal shield flexure member 10 and the countersunk threaded receptacles of the thermal shield 54 and the countersunk openings in the core barrel 52 can be tightly controlled to ensure the necessary tolerances for installation of the thermal shield flexure member 10 with minimal pre-stress.

After the machining of the thermal shield 54 and the core barrel 54 are completed, the thermal shield flexure member 10 can be installed 80. As set forth above, installation of the thermal shield flexure member 10 includes positioning the thermal shield flexure member 10 so the bosses 26 and the bushings 34 are received by the countersunk threaded receptacles of the thermal shield 54 and the countersunk openings of the core barrel 52. Once the thermal shield flexure member 10 is properly positioned, the bolts 56 are utilized to connect the first face portion 12 to the thermal shield 54 (threads of the bolts 56 are threadedly engaged with the threaded receptacles of the thermal shield 54), and the bolts 58 are utilized to connect the second face portion 14 to the core barrel 52 by threadedly engaging with the arm portion 60 of the modified / "replaced" thermal shield flexure.

In view of the above, it will be appreciated that the configuration of the thermal shield flexure member 10 allows for it to be installed without welding and from the exterior side of the core barrel / exterior side of the thermal shield, without having to access the interior of the core barrel, thereby greatly reducing the cost, outage impact, and installation risk of replacing the thermal shield flexure with a similar or identical thermal shield flexure. It will also be appreciated that openings in the core barrel 52 which originally served to connect the modified / "replaced" thermal shield flexure to the core barrel 52 are reused to connect the thermal shield flexure member 10 to the core barrel 52 (by the bolts 58 connecting the thermal shield flexure member 10 to the arm portion 60 of the modified / "replaced" thermal shield flexure), and no additional openings have to be made through the core barrel 52. The method 70 and the thermal shield flexure member 10 provide a permanent repair for damaged thermal shield flexures regardless of the current extent of damage. The thermal shield flexure member 10 restores the vibratory behavior of the lower internals assembly of the reactor vessel to the design condition by directly replacing the functionality of existing thermal shield flexures with minimal changes to the stiffness characteristics. The system 50 also provides for better access to the bolts 56, 58 and the thermal shield flexure member 10 for future inspections.

Although the various aspects of the thermal shield flexure member 10 have been described herein in connection with certain disclosed aspects, many modifications and variations to those aspects may be implemented. Also, where materials are disclosed for certain components, other materials may be used. Furthermore, according to various aspects, a single component may be replaced by multiple components, and multiple components may be replaced by a single component, to perform a given function or functions. The foregoing description and the appended claims are intended to cover all such modifications and variations as falling within the scope of the claims.

While this invention has been described as having exemplary designs, the described invention may be further modified within the scope of the claims. For example, although the invention was described in the context of a pressurized water reactor, the general principles of the invention are equally applicable to other types of reactors.

## Claims

1. A thermal shield flexure member for use in a pressurized water reactor, the pressurized water reactor comprising a core barrel and a thermal shield, the thermal shield flexure member comprising:
a first face portion (12) defining openings (18);
a second face portion (14) defining openings (28); and
a third portion (16A) connected to the first face portion (12) and the second face portion (14), wherein the third portion comprises a radiused portion (38A),
**characterized in that**
the third portion (16A) further comprises
a first leg portion (36A) connected to the radiused portion (38A); and
a second leg portion (42) connected to the radiused portion (38A);
wherein the thermal shield flexure member is configured to provide:
flexibility in an axial direction to accommodate differential axial expansions of the core barrel and the thermal shield; and
rigidity in a radial direction to inhibit undesirable shell mode vibrations of at least one of the following: the core barrel; and the thermal shield.

2. The thermal shield flexure member of Claim 1, wherein the openings (18) defined by the first face portion (12) are countersunk on a first side (20) of the first face portion (12).

3. The thermal shield flexure member of Claim 1, wherein a sidewall of at least one of the openings (18) defined by the first face portion (12) define at least one recess (24) configured to receive an integral locking member (64) of a bolt (56).

4. The thermal shield flexure member of Claim 1, wherein the first face portion (12) further defines bosses (26) on a second side (22) of the first face portion (12), such as with at least one of the bosses (26) surrounding one of the openings (18) defined by the first face portion (12).

5. The thermal shield flexure member of Claim 1, wherein the openings (28) defined by the second face portion (14) are countersunk on a first side (30) of the second face portion (14).

6. The thermal shield flexure member of Claim 1, further comprising bushings (34) positioned against a second side (32) of the second face portion (14), such as with at least one of the bushings (34) surrounding one of the openings (28) defined by the second face portion (14)..

7. The thermal shield flexure member of Claim 1, wherein the third portion (16A) further comprises:
a second radiused portion; and
a leg portion (36A) connected to the radiused portion (38A) and the second radiused portion.

8. A system (50), comprising:
a thermal shield flexure member (10) as claimed in claim 1;
a core barrel (52);
a thermal shield (54); and
an arm portion (60) of a modified thermal shield flexure, wherein the arm portion (60) is positioned interior to and bolted to the core barrel (52);
wherein the thermal shield flexure member (10) is positioned exterior to the core barrel (52) and comprises:
the first face portion (12) bolted to the thermal shield (54);
the second face portion (14) bolted to the arm portion (60) of the modified thermal shield flexure; and
the third portion (16) connected to the first and second face portions (12, 14).

9. The system of Claim 8, wherein the thermal shield flexure member (10) further comprises bushings (34) positioned against the second face portion (14).

10. The system of Claim 8, wherein the third portion (16) further comprises:
the first leg portion (36) connected to the first face portion (12); and
the second leg portion (42) connected to the second face portion (14).

11. The system of Claim 8, wherein the third portion (16) further comprises:
a second radiused portion (38) connected to the first face portion (12);
wherein the first leg portion (36) is connected to the second radiused portion (38), and
the radiused portion (40) is connected to the second face portion (14).

12. The system of Claim 8, further comprising a plurality of thermal shield flexure members and/or a plurality of bolts (56) wherein at least one of the bolts (56) comprises an integral locking member (64).

13. A method of replacing a functionality of a thermal shield flexure of a pressurized water reactor, the method comprising:
modifying (72) a thermal shield fixture by removing a stem portion of the thermal shield flexure, wherein the modified thermal shield flexure comprises an arm portion positioned internal to and bolted to a core barrel;
removing (74) at least one bolt but less than all bolts connecting the arm portion to the core barrel;
modifying (76) the core barrel;
modifying (78) a thermal shield positioned exterior to the core barrel; and
installing (80) a thermal shield flexure member exterior to the core barrel.

14. The method of Claim 13, wherein removing the stem portion of the thermal shield flexure comprises removing at least one welded joint.

15. The method of Claim 13, wherein
modifying the thermal shield comprises creating threaded receptacles in the thermal shield; and/or
installing the thermal shield flexure member comprises bolting the thermal shield flexure member to the thermal shield and to the arm portion of the modified thermal shield flexure.

## Patentansprüche

1. Biegeelement für einen thermischen Schild zur Verwendung in einem Druckwasserreaktor, der Druckwasserreaktor umfassend ein Kernrohr und einen thermischen Schild, das Biegeelement für den thermischen Schild umfassend:
einen ersten Flächenabschnitt (12), der Öffnungen (18) definiert;
einen zweiten Flächenabschnitt (14), der Öffnungen (28) definiert; und
einen dritten Abschnitt (16A), der mit dem ersten Flächenabschnitt (12) und dem zweiten Flächenabschnitt (14) verbunden ist, wobei der dritte Abschnitt einen abgerundeten Abschnitt (38A) umfasst,
**dadurch gekennzeichnet, dass**
der dritte Abschnitt (16A) ferner umfasst
einen ersten Schenkelabschnitt (36A), der mit dem abgerundeten Abschnitt (38A) verbunden ist; und
einen zweiten Schenkelabschnitt (42), der mit dem abgerundeten Abschnitt (38A) verbunden ist;
wobei das Biegeelement für den thermischen Schild konfiguriert ist, um bereitzustellen:
Flexibilität in einer axialen Richtung, um unterschiedlichen axialen Ausdehnungen des Kernrohrs und des thermischen Schilds gerecht zu werden; und
Steifigkeit in einer radialer Richtung, um unerwünschte Schalenmodusschwingungen von mindestens einem der Folgenden zu verhindern: dem Kernrohr; und dem thermischen Schild.

2. Biegeelement für den thermischen Schild nach Anspruch 1, wobei die Öffnungen (18), die durch den ersten Flächenabschnitt (12) definiert sind, auf einer ersten Seite (20) des ersten Flächenabschnitts (12) versenkt sind.

3. Biegeelement für den thermischen Schild nach Anspruch 1, wobei eine Seitenwand von mindestens einer der Öffnungen (18), die durch den ersten Flächenabschnitt (12) definiert sind, mindestens eine Aussparung (24) definiert, die konfiguriert ist, um ein integriertes Verriegelungselement (64) einer Schraube (56) aufzunehmen.

4. Biegeelement für den thermischen Schild nach Anspruch 1, wobei der erste Flächenabschnitt (12) ferner Vorsprünge (26) auf einer zweiten Seite (22) des ersten Flächenabschnitts (12) definiert, beispielsweise wobei mindestens einer der Vorsprünge (26) eine der Öffnungen (18) umgibt, die durch den ersten Flächenabschnitt (12) definiert sind.

5. Biegeelement für den thermischen Schild nach Anspruch 1, wobei die Öffnungen (28), die durch den zweiten Flächenabschnitt (14) definiert sind, auf einer ersten Seite (30) des zweiten Flächenabschnitts (14) versenkt sind.

6. Biegeelement für den thermischen Schild nach Anspruch 1, ferner umfassend Buchsen (34), die an einer zweiten Seite (32) des zweiten Flächenabschnitts (14) positioniert sind, wobei beispielsweise mindestens eine der Buchsen (34) eine der Öffnungen (28) umgibt, die durch den zweiten Flächenabschnitt (14) definiert sind.

7. Biegeelement für den thermischen Schild nach Anspruch 1, wobei der dritte Abschnitt (16A) ferner umfasst:
einen zweiten abgerundeten Abschnitt; und
einen Schenkelabschnitt (36A), der mit dem abgerundeten Abschnitt (38A) und dem zweiten abgerundeten Abschnitt verbunden ist.

8. System (50), umfassend:
ein Biegeelement (10) für den thermischen Schild nach Anspruch 1;
ein Kernrohr (52);
einen thermischen Schild (54); und
einen Armabschnitt (60) einer modifizierten Biegung für den thermischen Schild, wobei der Armabschnitt (60) innerhalb des Kernrohrs (52) positioniert und mit diesem verschraubt ist;
wobei das Biegeelement (10) für den thermischen Schild außerhalb des Kernrohrs (52) positioniert ist und umfasst:
den ersten Flächenabschnitt (12), der mit dem thermischen Schild (54) verschraubt ist;
den zweiten Flächenabschnitt (14), der mit dem Armabschnitt (60) der modifizierten Biegung für den thermischen Schild verschraubt ist; und
wobei der dritte Abschnitt (16) mit dem ersten und dem zweiten Flächenabschnitt (12, 14) verbunden ist.

9. System nach Anspruch 8, wobei das Biegeelement (10) für den thermischen Schild ferner Buchsen (34) umfasst, die an dem zweiten Flächenabschnitt (14) positioniert sind.

10. System nach Anspruch 8, wobei der dritte Abschnitt (16) ferner umfasst:
den ersten Schenkelabschnitt (36), der mit dem ersten Flächenabschnitt (12) verbunden ist; und
den zweiten Schenkelabschnitt (42), der mit dem zweiten Flächenabschnitt (14) verbunden ist.

11. System nach Anspruch 8, wobei der dritte Abschnitt (16) ferner umfasst:
einen zweiten abgerundeten Abschnitt (38), der mit dem ersten Flächenabschnitt (12) verbunden ist;
wobei der erste Schenkelabschnitt (36) mit dem zweiten abgerundeten Abschnitt (38) verbunden ist, und
der abgerundete Abschnitt (40) mit dem zweiten Flächenabschnitt (14) verbunden ist.

12. System nach Anspruch 8, ferner umfassend eine Vielzahl von Biegeelementen für den thermischen Schild und/oder eine Vielzahl von Schrauben (56), wobei mindestens eine der Schrauben (56) ein integriertes Verriegelungselement (64) umfasst.

13. Verfahren zum Ersetzen einer Funktionalität einer Biegung für den thermischen Schild eines Druckwasserreaktors, das Verfahren umfassend:
Modifizieren (72) einer Halterung für den thermischen Schild durch Entfernen eines Schaftabschnitts der Biegung für den thermischen Schild, wobei die modifizierte Biegung für den thermischen Schild einen Armabschnitt umfasst, der innerhalb eines Kernrohrs positioniert und mit diesem verschraubt ist;
Entfernen (74) von mindestens einer Schraube, jedoch nicht allen Schrauben, die den Armabschnitt mit dem Kernrohr verbinden;
Modifizieren (76) des Kernrohrs;
Modifizieren (78) eines thermischen Schilds, der außerhalb des Kernrohrs positioniert ist; und
Installieren (80) eines Biegeelements für den thermischen Schild außerhalb des Kernrohrs.

14. Verfahren nach Anspruch 13, wobei das Entfernen des Schaftabschnitts der Biegung für den thermischen Schild das Entfernen mindestens einer Schweißnaht umfasst.

15. Verfahren nach Anspruch 13, wobei:
das Modifizieren des thermischen Schilds das Erzeugen von Gewindeaufnahmen in dem thermischen Schild umfasst; und/oder
das Installieren des Biegeelements für den thermischen Schild das Verschrauben des Biegeelements für den thermischen Schild mit dem thermischen Schild und mit dem Armabschnitt der modifizierten Biegevorrichtung des thermischen Schilds umfasst.

## Revendications

1. Élément de flexion de bouclier thermique pour une utilisation dans un réacteur à eau sous pression, le réacteur à eau sous pression comprenant une jupe de cœur et un bouclier thermique, l'élément de flexion de bouclier thermique comprenant :
une première partie de face (12) définissant des ouvertures (18) ;
une seconde partie de face (14) définissant des ouvertures (28) ; et
une troisième partie (16A) reliée à la première partie de face (12) et à la seconde partie de face (14), dans lequel la troisième partie comprend une partie arrondie (38A),
**caractérisé en ce que**
la troisième partie (16A) comprend en outre
une première partie de branche (36A) reliée à la partie arrondie (38A) ; et
une seconde partie de branche (42) reliée à la partie arrondie (38A) ;
dans lequel l'élément de flexion du bouclier thermique est configuré pour fournir :
la flexibilité dans une direction axiale pour s'adapter aux dilatations axiales différentielles de la jupe de cœur et du bouclier thermique ; et
et une rigidité dans une direction radiale pour empêcher les vibrations indésirables en mode de coque d'au moins l'un parmi : la jupe de cœur ; et le bouclier thermique.

2. Élément de flexion de bouclier thermique selon la revendication 1, dans lequel les ouvertures (18) définies par la première partie de face (12) sont fraisées sur un premier côté (20) de la première partie de face (12).

3. Élément de flexion de bouclier thermique selon la revendication 1, dans lequel une paroi latérale d'au moins l'une des ouvertures (18) définies par la première partie de face (12) définit au moins un évidement (24) conçu pour recevoir un élément de verrouillage intégré (64) d'un boulon (56).

4. Élément de flexion de bouclier thermique selon la revendication 1, dans lequel la première partie de face (12) définit en outre des bossages (26) sur un second côté (22) de la première partie de face (12), par exemple avec au moins l'un des bossages (26) entourant l'une des ouvertures (18) définies par la première partie de face (12).

5. Élément de flexion de bouclier thermique selon la revendication 1, dans lequel les ouvertures (28) définies par la seconde partie de face (14) sont fraisées sur un premier côté (30) de la seconde partie de face (14).

6. Élément de flexion de bouclier thermique selon la revendication 1, comprenant en outre des douilles (34) positionnées contre un second côté (32) de la seconde partie de face (14), par exemple avec au moins l'une des douilles (34) entourant l'une des ouvertures (28) définies par la seconde partie de face (14).

7. Élément de flexion de bouclier thermique selon la revendication 1, dans lequel la troisième partie (16A) comprend en outre :
une seconde partie arrondie ; et
une partie de branche (36A) reliée à la partie arrondie (38A) et à la seconde partie arrondie.

8. Système (50), comprenant :
un élément de flexion de bouclier thermique (10) selon la revendication 1 ;
une jupe de coeur (52) ;
un bouclier thermique (54) ; et
une partie de bras (60) d'une flexion de bouclier thermique modifiée, dans lequel la partie de bras (60) est positionnée à l'intérieur de et boulonnée à la jupe de coeur (52) ;
dans lequel l'élément de flexion de bouclier thermique (10) est positionné à l'extérieur de la jupe de coeur (52) et comprend :
la première partie de face (12) boulonnée au bouclier thermique (54) ;
la seconde partie de face (14) boulonnée à la partie de bras (60) de la flexion de bouclier thermique modifiée ; et
la troisième partie (16) reliée aux première et seconde parties de face (12, 14).

9. Système selon la revendication 8, dans lequel l'élément de flexion de bouclier thermique (10) comprend en outre des douilles (34) positionnées contre la seconde partie de face (14).

10. Système selon la revendication 8, dans lequel la troisième partie (16) comprend en outre :
la première partie de branche (36) reliée à la première partie de face (12) ; et
la seconde partie de branche (42) reliée à la seconde partie de face (14).

11. Système selon la revendication 8, dans lequel la troisième partie (16) comprend en outre :
une seconde partie arrondie (38) reliée à la première partie de face (12) ;
dans lequel la première partie de branche (36) est reliée à la seconde partie arrondie (38), et
la partie arrondie (40) est reliée à la seconde partie de face (14).

12. Système selon la revendication 8, comprenant en outre une pluralité d'éléments de flexion de bouclier thermique et/ou une pluralité de boulons (56), dans lequel au moins l'un des boulons (56) comprend un élément de verrouillage intégré (64).

13. Procédé de remplacement d'une fonctionnalité d'une flexion de bouclier thermique d'un réacteur à eau sous pression, le procédé comprenant :
la modification (72) d'un élément de fixation de bouclier thermique en retirant une partie de tige de la flexion de bouclier thermique, dans lequel la flexion de bouclier thermique modifiée comprend une partie de bras positionnée à l'intérieur de et boulonnée à une jupe de cœur ;
le retrait (74) d'au moins un boulon mais pas de la totalité des boulons reliant la partie de bras à la jupe de cœur ;
la modification (76) de la jupe de cœur ;
la modification (78) d'un bouclier thermique positionné à l'extérieur de la jupe de cœur ; et
l'installation (80) d'un élément de flexion de bouclier thermique à l'extérieur de la jupe de cœur.

14. Procédé selon la revendication 13, dans lequel le retrait de la partie de tige de la flexion de bouclier thermique comprend le retrait d'au moins un joint soudé.

15. Procédé selon la revendication 13, dans lequel
la modification du bouclier thermique comprend la création de logements taraudés dans le bouclier thermique ; et/ou
l'installation de l'élément de flexion de bouclier thermique comprend le boulonnage de l'élément de flexion de bouclier thermique au bouclier thermique et à la partie de bras de la flexion de bouclier thermique modifiée.
